# EUROPÄISCHE PATENTANMELDUNG

(11) **EP 0 856 463 A2**
(43) Veröffentlichungstag der Anmeldung: **05.08.1998**
(21) Anmeldenummer: 98100258.7
(22) Anmeldetag: 09.01.1998
(51) Int. Cl.: B62M 25/02

(54) **Schalter zur Steuerung von Fahrradgetrieben**

(30) Priorität: 04.02.1997 DE 19703931
(71) Anmelder: SRAM Deutschland GmbH, 97424 Schweinfurt (DE)
(72) Erfinder: Rau, Johannes, Dipl.-Ing., 97421 Schweinfurt (DE); Johanni, Bernhard, Dipl.-Ing., 97464 Oberwerrn (DE); Arbeiter, Markus, Dipl.-Ing., 97070 Würzburg (DE)

(57) **Zusammenfassung**

Schalter (1), insbesondere Schrittschalter zur Steuerung von Getrieben an Fahrrädern oder ähnlichen Fahrzeugen, mit einem Festgehäuse (7) und einem Bedienungselement (6), wobei das Bedienungselement sich in zwei Bedienungsrichtungen betätigen läßt, um ein Zugseil zur Steuerung der Fahrradgetriebe zu ziehen oder freizugeben. Ebenso sind mehrere Schaltschritte in beiden Bedienungsrichtungen möglich, wobei das System sich auf Daumenschalter und auf Drehgriffschalter anwenden läßt. Der Vorteil der Schalteinrichtung liegt in der starken Vereinfachung der Konstruktion und in der Kunststoffausführung der Teile.

## Beschreibung

Die Erfindung betrifft einen Schalter zur Steuerung von Fahrradgetrieben gemäß dem Oberbegriff des Anspruchs 1.

Ein Schalter, insbesondere ein Schrittschalter zur Steuerung von Fahrradgetrieben ist mit dem deutschen Gebrauchsmuster 90 15 515 bekannt geworden, wo durch die Betätigung eines einzigen Schalthebels jeder benachbarte Gang von der jeweiligen Schaltstellung nach oben oder unten schaltbar ist und zwar dadurch, daß der Schalthebel jeweils bis zum Anschlag durchgeschaltet und danach wieder freigegeben wird, wodurch sich der Schalthebel in seine Bereitschaftsstellung zurückbewegt.

Der vorgeschlagene Schalter hat dem Stand der Technik gegenüber den Vorteil, durch Kunststoff-Spritzguß-Bauweise kostengünstiger hergestellt und montiert zu werden. Ferner ist der jeweilige Schaltschritt nicht auf eine Gangstufe beschränkt, vielmehr können mehrere Gangstufen in beliebiger Bedienungsrichtung angeordnet sein, was entweder durch eine Begrenzung durch Anschläge oder aber durch Wegbegrenzung an der Schenkelfeder erreicht werden kann. Schließlich läßt sich das Prinzip nicht nur für Rahmenschalter sondern auch für Drehgriffschalter anwenden, wo die Schrittschaltfähigkeit durch nur geringen Mehraufwand, nämlich durch die Integration eines Schaltringes mit der Schenkelfeder, erreicht wird.

Es ist daher die Aufgabe der Erfindung, einen Schalter für die Steuerung von Fahrradgetrieben zu schaffen, der kostengünstig herstellbar ist, als Daumen- und Drehgriffschalter verwendbar ist und Schritte in beide Bedienungsrichtungen in beliebiger Anzahl erlaubt.

Die Lösung der Aufgabe ist in den Ansprüchen beschrieben.

Anhand von Zeichnungen werden drei verschiedene Ausführungsbeispiele von Schaltern zur Steuerung von Fahrradgetrieben erläutert. Es zeigen:
- Fig. 1: einen Schalter mit einem Bedienungselement, welches einteilig mit einer Gelenkfeder, einem Mitnehmerbolzen und zwei Mitnahmezähnen verbunden ist, in einem Festgehäuse;
- Fig. 2: den Schalter gemäß Fig. 1 in perspektivischer Darstellung;
- Fig. 3: einen Schalter ähnlich Fig. 1, mit einer zweischenkligen Gelenkfeder;
- Fig. 4: den Schalter gemäß Fig. 3 in perspektivischer Darstellung;
- Fig. 5: einen Schalter mit einem Bedienungselement, einer Gelenkfeder, einem Mitnehmerbolzen sowie mit Mitnahmezähnen als Drehgriffschalter ausgeführt;
- Fig. 6: den Drehgriffschalter gem. Fig. 5 in perspektivischer Darstellung.

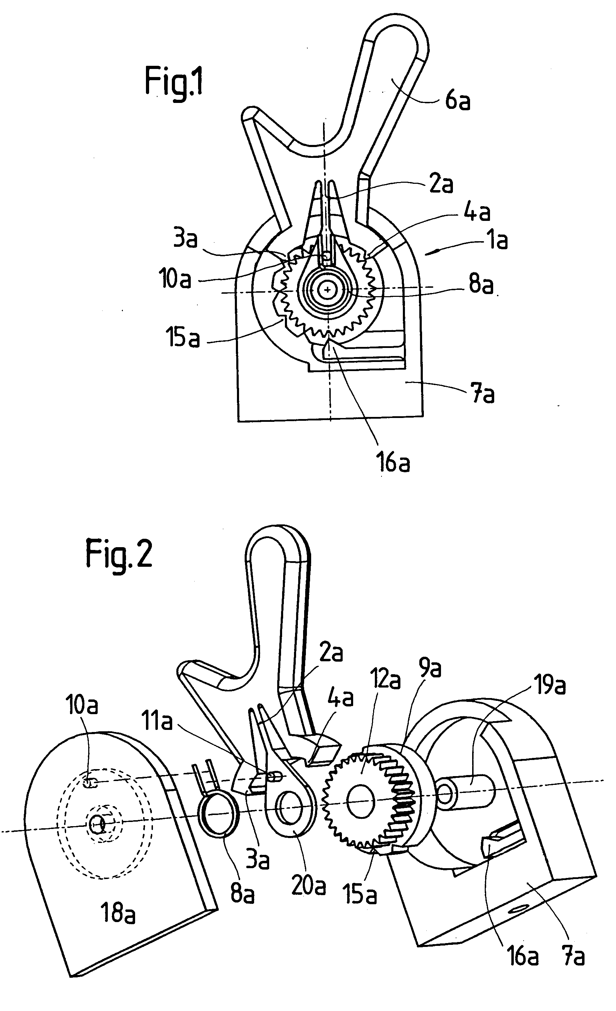

Wird gemäß den Fig. 1 und 2 mit 1a ein Schalter für die Steuerung von Fahrradgetrieben bezeichnet, so umfaßt dieser ein Festgehäuse 7a mit einer Rastfeder 16a, ein darin drehbar angeordnetes Bedienungselement 6a, welches einteilig mit einer Gelenkfeder 2a, einem Mitnehmerbolzen 10a sowie mit einem ersten Mitnahmezahn 3a und einem zweiten Mitnahmezahn 4a einteilig verbunden ist. Um die Lagerstelle des Bedienungselementes 6a im Festgehäuse 7a ist eine Schenkelfeder 8a angeordnet, die mit ihren beiden Schenkeln den Mitnehmerbolzen 1a umfaßt.

Gleichzeitig umfaßt die Schenkelfeder 8a mit ihren beiden Schenkeln einen Festbolzen 10a, der in einem Gehäusedeckel 18a angeordnet ist. Der Gehäusedeckel 18a ist mit dem Festgehäuse 7a verbunden und umschließt in Verbindung mit diesem die vorgenannten Elemente. An die Gelenkfeder 2a ist ein Lagerring 20a angeformt, der auf der Lagerstelle 19a gelagert ist und das Bedienungselement zentriert. Ferner ist auf der Lagerstelle 19a eine Einheit, bestehend aus einer Zahnscheibe 12a und einer Wickelscheibe 9a angeordnet, wobei in die Verzahnung der Zahnscheibe 12a die Mitnahmezähne 3a und 4a eingreifen, während die Wickelscheibe 9a Rasten 15a aufweist, in die die vorgenannten Rastfeder 16a eingreift. Als letzte wird auf der Lagerstelle 19a die Schenkelfeder 8a montiert, die mit ihren beiden Schenke den Mitnehmerbolzen 11a sowie den Festbolzen 10a unter Vorspannung hält.

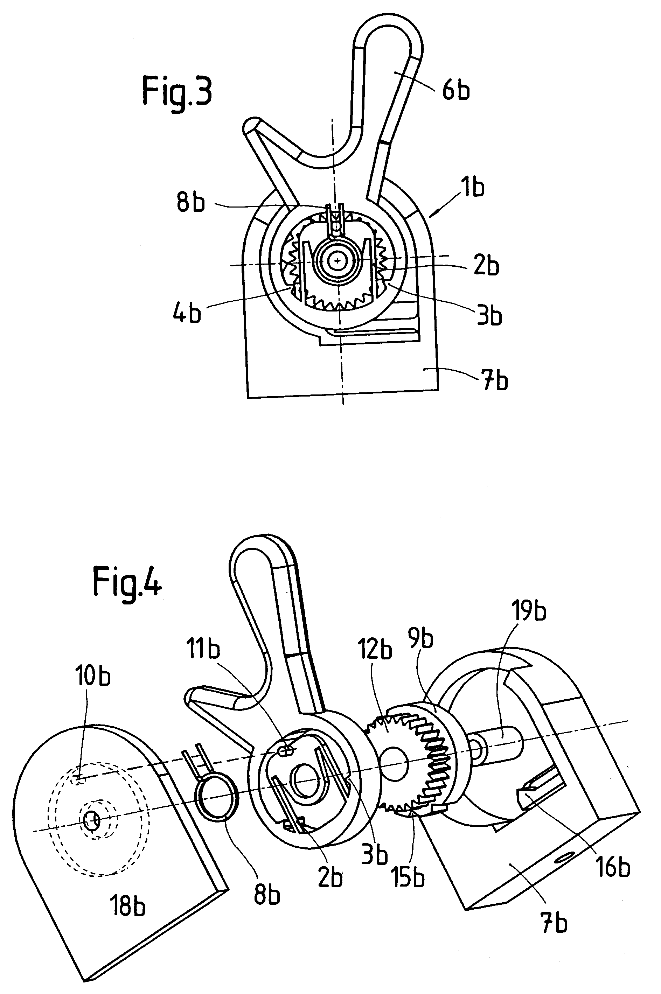

Wird gemäß den Fig. 3 und 4 mit 1b ein Schalter für die Steuerung von Fahrradgetrieben bezeichnet, so umfaßt dieser ein Festgehäuse 7b mit einer Rastfeder 16b, ein darin drehbar angeordnetes Bedienungselement 6b, welches einteilig mit einer Gelenkfeder 2b, einem Mitnehmerbolzen 10b sowie mit einem ersten Mitnahmezahn 3b und einem zweiten Mitnahmezahn 4b einteilig verbunden ist. Um die Lagerstelle des Bedienungselementes 6b im Festgehäuse 7b ist eine Schenkelfeder 8b angeordnet, die mit ihren beiden Schenkeln den Mitnehmerbolzen 1b umfaßt.

Gleichzeitig umfaßt die Schenkelfeder 8b mit ihren beiden Schenkeln einen Festbolzen 10b, der in einem Gehäusedeckel 18b angeordnet ist. Der Gehäusedeckel 18b ist mit dem Festgehäuse 7b verbunden und umschließt in Verbindung mit diesem die vorgenannten Elemente. An die Gelenkfeder 2b ist eine Lagerringe 20b angeformt, der auf der Lagerstelle 19b gelagert ist und das Bedienungselement zentriert. Ferner ist auf der Lagerstelle 19b eine Einheit, bestehend aus einer Zahnscheibe 12b und einer Wickelscheibe 9b angeordnet, wobei in die Verzahnung der Zahnscheibe 12b die Mitnahmezähne 3b und 4b eingreifen, während die Wickelscheibe 9b Rasten 15b aufweist, in die die vorgenannten Rastfeder 16b eingreift. Als letzte wird auf der Lagerstelle 19b die Schenkelfeder 8b montiert, die mit ihren beiden Schenkel den Mitnehmerbolzen 11b sowie den Festbolzen 10b unter Vorspannung hält.

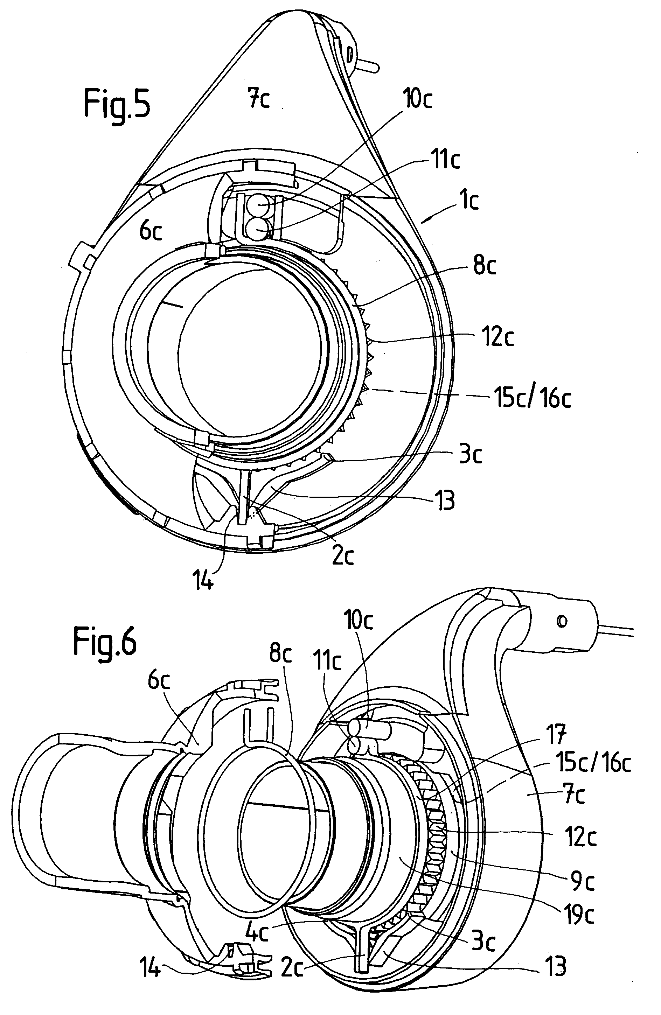

Gemäß Fig. 5 wird eine Schalter 1c gezeigt, der als Drehgriffschalter ausgeführt ist und im wesentlichen aus einem Festgehäuse 7c und einem Bedienungselement 6c besteht.

Die Fig. 6 zeigt den Schalter in perspektivischer Explosivdarstellung, wodurch die Anordnung der Teile klarer zu erkennen ist. Das Festgehäuse 7a weist eine Lagerstelle 19c auf, auf welcher eine Einheit, bestehend aus einer Wickelscheibe 9c und einer Zahnscheibe 12c, drehbar angeordnet ist, wobei bei Drehung der Einheit ein Zugseil zur Steuerung der Fahrradgetriebe auf die Wickelscheibe 9c aufwickelbar ist. Ferner ist auf der Lagerstelle 19c ein Schaltring 17 angeordnet, welcher einteilig mit einem Mitnehmerbolzen 11c, einer Gelenkfeder 2c und einem Rastbügel 13 mit einem ersten Mitnahmezahn 3c und einem zweiten Mitnahmezahl 4c verbunden ist. Ferner zentriert sich auf der Lagerstelle 19c das Bedienungselement 6c mit einer Mitnahmekerbe 14, die in das äußere Ende der Gelenkfeder 2c eingreift und diese vorspannen kann. Damit das Bedienungselement 6c nach Abschluß einer jeden Schaltung immer wieder in die Ausgangslage zurückgedreht wird, ist eine Schenkelfeder 8c um die Lagerstelle 19c angeordnet, die mit ihren Schenkeln neben dem Mitnehmerbolzen 11c auch einen festen Bolzen 10c umspannt, welcher mit dem Festgehäuse 7c verbunden ist. Die Wickelscheibe 9c stützt sich am Festgehäuse 7c über eine hier nicht dargestellte Rastenverbindung aus Rasten 15c und einer Rastfeder 16c ab, so daß auch hierdurch die einzelnen Rastschritte im Schaltweg bei der Steuerung der Fahrradgetriebe eingehalten werden.

Hinsichtlich der Schaltfunktion ist allen hier dargestellten Schaltern gemeinsam, daß durch die Betätigung des Bedienungselements 6a,6b,6c die Gelenkfeder 2a,2b,2c solange vorgespannt wird, bis entweder der erste Mitnahmezahn 3a,3b,3c oder der zweite Mitnahmezahn 4a,4b,4c mit der Zahnscheibe 12a,12b,12c in Wirkverbindung tritt, woraufhin der Mitnehmerbolzen 11a,11b,11c gegen einen der beiden Schenke der Schenkelfeder 8a,8b,8c gepreßt wird und diese in einer Richtung vorspannt, sofern die Bedienungskraft die Vorspannkraft der Schenkelfeder 8a,8b,8c übersteigt. Da die Wickelscheibe 9a,9b,9c mit dem Festgehäuse 7a,7b,7c über eine Rastfeder 16a,16b,16c und die dazu gehörigen Rasten 15a,15b,15c in Verbindung steht, ist ein höheres Anfangsdrehmoment beim Schalten erforderlich, wobei die Rastenverbindung durch Ausheben der Rastfeder 16a,16b,16c gelöst wird. Je nach Konstruktion können ein oder mehrere Schaltschritte durchgeführt werden, die abhängig sind von der Bewegungsfreiheit des Bedienungselementes 6a,6b,6c, welches mit Anschlägen im Festgehäuse 7a,7b,7c oder aber durch die Blockstellung der Schenkelfeder 8a,8b,8c in einer Bewegungsrichtung begrenzbar ist.

## Patentansprüche

1. Schalter (1a,1b,1c) zur Steuerung von Fahrradgetrieben umfassend:
* ein Festgehäuse (7a,7b,7c)
* ein daran drehbar angeordnetes Bedienungselement (6a,6b,6c), welches über eine Schenkelfeder (8a,8b,8c) in einer definierten Lage zum Festgehäuse (7a,7b,7c) gehalten wird,
* eine Wickelscheibe (9a,9b,9c) für ein Zugseil, die mit einer Zahnscheibe (12a,12b,12c) verbunden ist,
* Mitnahmezähne (3a,3b,3c,4a,4b,4c), die mit dem Bedienungselement (6a,6b,6c) verbunden sind
dadurch gekennzeichnet,
daß das Bedienungselement (6a,6b) die Gelenkfeder (2a,2b), ein Mitnehmerbolzen (11a,11b), der erste Mitnahmezahn (3a,3b) und der zweite Mitnahmezahn (4a,4b) miteinander verbunden sind, wobei das Bedienungselement (6a,6b) auf einer ersten kurzen Schaltwegstrecke die Gelenkfeder (2a,2b) vorspannt und je nach Bedienungsrichtung entweder den ersten Mitnahmezahn (3a,3b) oder den zweiten Mitnahmezahn (4a,4b) in Eingriff mit der Zahnscheibe (12a,12b) bringt, bevor sich der Mitnehmerbolzen (11a,11b) auf seiner von der Schenkelfeder (8a,8b) erzwungenen Position herausbewegt.

2. Schalter (1a,1b,1c) zur Steuerung von Fahrradgetrieben umfassend:
* ein Festgehäuse (7a,7b,7c)
* ein daran drehbar angeordnetes Bedienungselement (6a,6b,6c), welches über eine Schenkelfeder (8a,8b,8c) in einer definierten Lage zum Festgehäuse (7a,7b,7c) gehalten wird,
* eine Wickelscheibe (9a,9b,9c) für ein Zugseil, die mit einer Zahnscheibe (12a,12b,12c) verbunden ist,
* Mitnahmezähne (3a,3b,3c,4a,4b,4c), die mit dem Bedienungselement (6a,6b,6c) verbunden sind
dadurch gekennzeichnet,
daß das Bedienungselement (6c) mit der Gelenkfeder (2c) über eine Mitnehmerkerbe (14) formschlüssig drehfest verbunden ist, während der erste Mitnahmezahn (3c) und der zweite Mitnahmezahn (4c) über einen Rastbügel (13) mit der Drehfeder (2c) und die Drehfeder (2) über einen Schaltring (17) mit dem Mitnehmerbolzen (11c) verbunden sind, wobei das Bedienungselement (6c) auf einer ersten kurzen Schaltwegstrecke die Gelenkfeder (2c) vor-spannt und je nach Bedienungsrichtung entweder den ersten Mitnahmezahn (3c) oder den zweiten Mitnahmezahn (4c) in Eingriff mit der Zahnscheibe (12c) bringt, bevor sich der Mitnehmerbolzen (11c) aus seiner von der Schenkelfeder (8c) erzwungenen Position herausbewegt.

3. Schalter nach einem der Ansprüche 1 oder 2,
dadurch gekennzeichnet,
daß die Wickelscheibe (9a,9b,9c) um mindestens einen Rastschritt in jeder Bedienungsrichtung gegenüber dem Festgehäuse (7a,7b,7c) verdreht werden kann, wobei der Rastschritt durch das Zusammenwirken von Rastverzahnungen (12a,12b,12c) und Rastfedern (16a,16b,16c) zwischen der Wickelscheibe (9a,9b,9c) und dem Festgehäuse (7a,7b,7c) bewirkt wird.

4. Schalter nach einem der Ansprüche 1 bis 3,
dadurch gekennzeichnet,
daß der Schaltweg des Bedienungselementes (6a,6b,6c) nach beiden Bedienungsrichtungen durch Anschläge am Festgehäuse (7a,7b,7c) begrenzt ist.

5. Schalter nach einem der Ansprüche 1 bis 4,
dadurch gekennzeichnet,
daß das Bedienungselement (6a,6b), die Gelenkfeder (2a,2b), der Mitnehmerbolzen (11a,11b) sowie die Mitnahmezähne (3a,3b und 4a,4b) einteilig ausgeführt sind.

6. Schalter nach einem der Ansprüche 1 bis 5,
dadurch gekennzeichnet,
daR die Gelenkfeder (2c), der Rastbügel (13) mit den Mitnahmezähnen (3c,4c) und der Mitnehmerbolzen (11c) einteilig mit einem Schaltring (17) ausgeführt sind.
